(19) Europäisches Patentamt
European Patent Office
Office européen des brevets

(11) **EP 0 571 726 B1**

(12) **EUROPÄISCHE PATENTSCHRIFT**

(45) Veröffentlichungstag und Bekanntmachung des Hinweises auf die Patenterteilung:
**11.06.1997 Patentblatt 1997/24**

(51) Int. Cl.$^6$: **B62D 7/15**, B62D 6/00
// (B62D6/00, 101:00, 113:00, 137:00)

(21) Anmeldenummer: **93104133.9**

(22) Anmeldetag: **13.03.1993**

(54) **Nicht spurgebundenes Fahrzeug mit selbsttätig arbeitender Zusatzlenkung**

Not track-bounded vehicle with self actuating additional steering system

Véhicule non-guidé par une voie de roulement avec direction additionelle à fonctionnement autonome

(84) Benannte Vertragsstaaten:
**ES FR GB IT SE**

(30) Priorität: **28.05.1992 DE 4217634**

(43) Veröffentlichungstag der Anmeldung:
**01.12.1993 Patentblatt 1993/48**

(73) Patentinhaber: **Daimler-Benz Aktiengesellschaft**
**70546 Stuttgart (DE)**

(72) Erfinder: **Tran, Van Tuan, Dr.-Ing.**
**W-7000 Stuttgart 80 (DE)**

(56) Entgegenhaltungen:
EP-A- 0 443 520     EP-A- 0 474 130
WO-A-90/14980      DE-A- 3 734 477

• PATENT ABSTRACTS OF JAPAN vol. 16, no. 169 (M-1239)23. April 1992 & JP-A-04 015 171 (ATSUGI UNISIA CORP) 20. Januar 1992
• PATENT ABSTRACTS OF JAPAN vol. 13, no. 153 (M-813)(3501) 13. April 1989 & JP-A-63 312 271 (HONDA MOTOR CO LTD) 20. Dezember 1988

**Beschreibung**

**Die Erfindung betrifft ein nicht spurgebundenes Fahrzeug mit einer vom Fahrer betätigten Lenkung sowie einer davon mechanisch entkoppelten Zusatzlenkung**

Die Erfindung steht in Zusammenhang mit rechnergestützten Lenksystemen von Kraftfahrzeugen.

In diesem Zusammenhang zeigt die EP-A-0 474 130 die Möglichkeit, auf eine zwischen der vom Fahrer betätigten Lenkhandhabe und den gelenkten Fahrzeugrädern ständig wirksame Zwangskopplung zu verzichten und die Lenkhandhabe sowie die gelenkten Fahrzeugräder über eine Regelstrecke wirkungsmäßig zu koppeln. Dabei wird durch die Betätigung der Lenkhandhabe ein Sollwert für die Giergeschwindigkeit des Fahrzeuges, d.h. dessen Drehgeschwindigkeit bezüglich seiner Hochachse, vorgegeben. Die automatischen Stellorgane der Fahrzeuglenkung werden dann mittels des Reglers so betätigt, daß der Istwert der Giergeschwindigkeit dem jeweiligen Sollwert angeglichen wird. Damit kann gewährleistet werden, daß der Fahrer bei Betätigung des Lenkhandrades nur noch die Seitwärtsabweichung zwischen der gewünschten Fahrspur und der tatsächlichen Fahrspur zu berücksichtigen braucht. Dagegen hat die Giergeschwindigkeit des Fahrzeuges jeweils den durch die Stellung der Lenkhandhabe vorgegebenen Wert.

Nach der EP-A-04 74 130 kann das Fahrzeug zusätzlich zu lenkbaren Vorderrädern auch lenkbare Hinterräder aufweisen, wobei die Lenkbarkeit der Hinterräder zur Veränderung der Dynamik der Gierbewegung herangezogen werden kann, d.h. zur Veränderung der Gierverstärkung bzw. der Proportionalität zwischen dem Stellweg der Lenkhandhabe und der damit verbundenen Änderung des Sollwertes der Giergeschwindigkeit. Im Ergebnis wird dadurch also die Proportionalität zwischen Stellhub der Lenkhandhabe und Änderung der Giergeschwindigkeit des Fahrzeuges bestimmt.

Aus der DE-A-37 34 477 ist ein ähnliches Konzept bekannt, jedoch mit dem Unterschied, daß die Lenkhandhabe bzw. ein Lenkhandrad mit gelenkten vorderen Fahrzeugrädern zwangsgekoppelt ist und davon unabhängig lenkbare Hinterräder mittels eines automatisch arbeitenden Reglers betätigt werden, derart, daß sich ein durch die Stellung der Lenkhandhabe vorgegebener Bewegungsparameter des Fahrzeuges einstellt. Des weiteren ist vorgesehen, daß durch die Stellung der Lenkhandhabe als Bewegungsparameter eine Linearkombination aus einer mit der Giergeschwindigkeit des Fahrzeuges korrelierten ersten Größe und einer mit der Querbeschleunigung des Fahrzeuges korrelierten zweiten Größe besteht, wobei ein von der Fahrgeschwindigkeit des Fahrzeuges abhängiger Gewichtungsfaktor vorgesehen sein kann, derart, daß der geregelte Parameter bei sehr geringer Fahrgeschwindigkeit praktisch ausschließlich mit der Giergeschwindigkeit und bei hoher Fahrgeschwindigkeit praktisch ausschließlich mit der Querbeschleunigung korreliert ist und nur bei mittleren Fahrgeschwindigkeiten sowohl eine Regelung der Giergeschwindigkeit als auch der Querbeschleunigung erfolgt.

Die EP-A-04 43 520 zeigt die Möglichkeit, den Schwimmwinkel eines Fahrzeuges, d.h. den Winkel zwischen Fahrzeuglängsrichtung und Bewegungsrichtung des Fahrzeugschwerpunktes rechnerisch aus den Drehzahlen der Fahrzeugräder zu bestimmen. Im wesentlichen stellt der Schwimmwinkel das Verhältnis der Drehzahldifferenz zwischen Vorder- und Hinterrädern und der Drehzahldifferenz zwischen rechten und linken Fahrzeugrädern dar. Im übrigen ist nach der EP-A-04 43 520 vorgesehen, bei einem Fahrzeug mit automatischer Hinterradzusatzlenkung und fahrerseitig betätigter Vorderradlenkung den Lenkwinkel der Hinterräder proportional zur Giergeschwindigkeit des Fahrzeuges sowie zum Schwimmwinkel zu steuern.

Aufgabe der Erfindung ist es, ein neues, vorteilhaftes Konzept für eine mit Rechnerunterstützung arbeitende Fahrzeuglenkung aufzuzeigen.

Diese Aufgabe wird erfindungsgemäß dadurch gelöst, daß eine vom Fahrer mittels einer Lenkhandhabe, insbesondere eines Lenkhandrades, betätigte Lenkung der Vorderräder sowie davon mechanisch entkoppelte, auf die Hinterräder wirkende Zusatzlenkung vorgesehen sind, deren Stellorgane mittels einer selbsttätig arbeitenden Steuervorrichtung in Abhängigkeit von vorgegebenen Parametern betätigt werden, wobei die Steuervorrichtung einen Zustandsregler umfaßt, welcher die Stellorgane der Zusatzlenkung steuert, wobei der für den Stellhub vorgegebene Wert einer Stellgröße proportional zum Istwert der Giergeschwindigkeit, zum Istwert des Schwimmwinkels, zum Istwert des von der Zusatzlenkung bewirkten Lenkwinkels sowie zu einer Zustandsgröße ist, deren Änderungsgeschwindigkeit von einer Abweichung zwischen dem Istwert der Giergeschwindigkeit und dem zugehörigen Sollwert, welcher durch den Verstellwinkel der Lenkhandhabe oder damit korrelierten Größen und vorzugsweise auch durch eine Fahrgeschwindigkeit und/oder einen wählbaren Wert der Gierverstärkung vorgegeben wird, abhängig ist.

Die Erfindung nutzt die Erkenntnis, daß durch den Zustandsregler die fahrdynamischen Parameter des Fahrzeuges praktisch unabhängig voneinander veränderbar sind, indem beispielsweise das weiter unten dargestellte Verfahren der Polvorgabe angewendet wird.

So läßt sich die Gierverstärkung, d.h. das Verhältnis zwischen der Giergeschwindigkeit des Fahrzeuges und dem vom Fahrer eingestellten Winkel des Lenkhandrades bzw. der damit korrelierten Größe - beispielsweise der allein durch die Verstellung des Lenkhandrades bewirkte Lenkwinkel der Vorderräder - (insbesondere bei stationärer Kreisfahrt), verändern, indem diese Verstärkung in den Regler eingegeben wird. Der Sollwert für die Giergeschwindigkeit kann aus dem Produkt von eingegebener Gierverstärkung und vom Winkel des Lenkhandrades (wie vom Fahrer eingestellt) ermittelt und dann bei Bestimmung der Zustandsgröße $u_l$ berücksichtigt werden.

Die Gierdämpfung des Fahrzeuges sowie dessen (ungedämpfte) Eigenfrequenz können unabhängig voneinander vorgegeben bzw. verändert werden, indem - etwa nach dem Verfahren der Polvorgabe - Proportionalitätsfaktoren entsprechend eingestellt bzw. verändert werden, mit denen die Istwerte der Giergeschwindigkeit, des Schwimmwinkels, des Lenkhandradwinkels sowie der obengenannten Zustandsgröße, deren Änderungsgeschwindigkeit von der Abweichung zwischen dem Istwert und dem Sollwert der Giergeschwindigkeit abhängt, bei Vorgabe der Stellgröße berücksichtigt werden.

Auf diese Weise kann durch Änderung von Regelungsparametern die Fahrdynamik des Fahrzeuges praktisch willkürlich geändert werden, wobei besonders hervorzuheben ist, daß die Gierverstärkung, die Gierdämpfung sowie die Eigenfrequenz unabhängig voneinander vorgebbar und einstellbar sind.

Bei mathematischer Betrachtung des erfindungsgemäßen Fahrzeuges beruht die Möglichkeit, die Gierdämpfung sowie die Eigenfrequenz des Fahrzeuges beliebig und voneinander unabhängig vorzugeben, darauf, daß dem Fahrzeug mit dem erfindungsgemäßen Zustandsregler Übertragungsfunktionen zugeordnet sind, die sich jeweils durch Quotienten eines Zähler-Polynoms und eines Nenner-Polynoms darstellen lassen, wobei die Nenner-Polynome aller Übertragungsfunktionen identisch sind und (zumindest) vier Nullstellen besitzen, die Pole der Übertragungsfunktionen bilden. Die Koordinaten dieser Pole sind umkehrbar eindeutig mit den Proportionalitätsfaktoren korreliert, mit denen die oben angegebenen Zustandsgrößen - Istwert der Giergeschwindigkeit, Istwert des Schwimmwinkels, Istwert des Lenkwinkels der Zusatzlenkung bzw. der Hinterräder sowie die Zustandsgröße, deren Änderungsgeschwindigkeit von der Abweichung zwischen Ist- und Sollwert der Giergeschwindigkeit abhängt - bei der Vorgabe der Stellgröße uberücksichtigt werden. Eine Veränderung der Proportionalitätsfaktoren führt also zu einer Verschiebung der Pole der Übertragungsfunktionen und umgekehrt. Da die Lage zweier Pole bestimmend für die Gierdämpfung sowie die Eigenfrequenz des Fahrzeuges ist, können die zugehörigen Werte ebenso wie die Lagen der zugeordneten beiden Pole durch entsprechende Variation der Proportionalitätsfaktoren beliebig eingestellt bzw. vorgegeben werden.

Für den Zustandsregler werden Informationen über die Giergeschwindigkeit $r$, den Schwimmwinkel $\beta$, den von der Zusatzlenkung bewirkten Lenkwinkel (in der Regel der Hinterradlenkwinkel) $\delta_r$ und den Lenkhandradwinkel oder über damit korrelierte Größen bzw. über die Fahrgeschwindigkeit $v$ benötigt, die in den Fahrzeugparametern und somit auch in den Proportionalitätsfaktoren enthalten ist.

Diese Informationen können grundsätzlich mittels entsprechender Sensoren oder Meßwertgeber bereitgestellt werden.

Unter Kostengesichtspunkten ist es jedoch zweckmäßig, lediglich für die Giergeschwindigkeit $r$, den von der Zusatzlenkung bewirkten Lenkwinkel $\delta_r$, den Lenkhandradwinkel sowie die Fahrgeschwindigkeit $v$ entsprechende Sensoren vorzusehen und den Schwimmwinkel $\beta$ mittelbar zu bestimmen, indem mittels eines Rechners entsprechende Schätzwerte erzeugt werden.

Dazu kann der Rechner beispielsweise mittels eines vorgegebenen mathematischen Fahrzeugmodelles bzw. eines entsprechenden Kennfeldes aus eingangsseitig zugeführten Signalen, die den Lenkhandradwinkel bzw. den dadurch bewirkten Lenkwinkel der Vorderräder $\delta_f$ und den durch die Zusatzlenkung verursachten Lenkwinkel bzw. den dadurch bewirkten Lenkwinkel der Hinterräder $\delta_r$ wiedergegeben, Werte für die Giergeschwindigkeit $r$ sowie den Schwimmwinkel $\beta$ ermitteln und sodann unter Berücksichtigung der Abweichung zwischen dem Istwert der Giergeschwindigkeit $r$ und dem rechnerseitig ermittelten Wert der Giergeschwindigkeit $\hat{r}$ das mathematische Fahrzeugmodell bzw. Kennfeld so in vorgebbarer Weise verändern, daß Istwert $r$ und rechnerseitig ermittelter Wert $\hat{r}$ der Giergeschwindigkeit übereinstimmen, wobei der mit diesem geänderten mathematischen Fahrzeugmodell bzw. Kennfeld ermittelte Wert des Schwimmwinkels $\beta$ als Schätzwert des Schwimmwinkels $\hat{\beta}$ herangezogen wird. Diese Ermittlung eines Schätzwertes für den Schwimmwinkel $\hat{\beta}$ kann nach der sogenannten Beobachter-Theorie erfolgen, bei der die nicht gemessene Zustandsgröße - hier der Schwimmwinkel $\beta$ - mittels Kenntnissen über das System aus Anfangsgrößen und gemessenen Zustandsgrößen ermittelt wird.

Durch Ermittlung der Schätzwerte des Schwimmwinkels $\hat{\beta}$ können entsprechende Sensoren, welche außerordentlich kostenaufwendig sind, eingespart werden.

Bei allen Ausführungsformen der Erfindung ist vorteilhaft, daß durch einen im Zustandsregler enthaltenen Integrierer auch auf das Fahrzeug einwirkende Störungen, wie z.B. Seitenwindeinflüsse, sehr weitgehend ausgeregelt werden können.

Fahrversuche haben gezeigt, daß die Regelung außerordentlich robust gegenüber veränderten Fahrbedingungen ist. So brauchen beispielsweise unterschiedliche Beladezustände des Fahrzeuges nicht berücksichtigt zu werden. Darüber hinaus können auch Änderungen der Fahrgeschwindigkeit unberücksichtigt bleiben. In beiden Fällen kann vielmehr von mittleren Werten ausgegangen werden.

Schließlich ist vorteilhaft, daß zwischen Soll- $r_w$ und Istwert $r$ der Giergeschwindigkeit keine längerfristige Abweichung auftreten kann, weil bei der Vorgabe der Stellgröße eine Zustandsgröße berücksichtigt wird, deren Änderungsgeschwindigkeit proportional zur Abweichung $r - r_w$ zwischen Soll- und Istwert der Giergeschwindigkeit $r_{w,r}$ ist, d.h. der Zustandsregler umfaßt ein Integralglied für die Abweichung zwischen Soll- und Istwert der Giergeschwindigkeit.

Dies ist eine wesentliche Ursache dafür, daß sich ein Fahrzeug mit der erfindungsgemäßen Regelung außerordentlich stabil verhält, und zwar auch dann, wenn die Betriebsumstände, wie Beladung u.dgl., deutlich unterschiedlich sind.

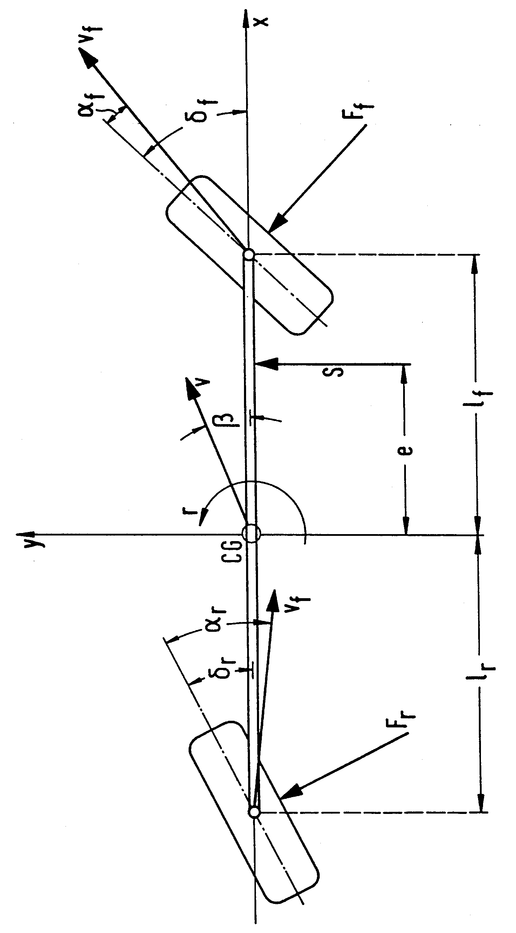

Nachfolgend wird die Erfindung noch beispielhaft unter Bezugnahme auf die Zeichnung anhand eines Fahrzeuges erläutert, welches eine vom Fahrer gesteuerte Vorderradlenkung und eine auf die Hinterräder wirkende Zusatzlenkung aufweist, deren Stellorgane automatisch - entkoppelt von den Lenkbewegungen der Vorderräder - betätigt werden.

Dabei zeigt die einzige Figur ein sogenanntes Einspur-Modell des Fahrzeuges, welches die laterale Fahrdynamik eines zweispurigen Fahrzeuges hinreichend genau wiedergibt. In dieser Figur bedeuten

CG    der Fahrzeugschwerpunkt,
x     die Fahrzeuglängsachse,
y     die Fahrzeugquerachse,
v     die Geschwindigkeit des Fahrzeuges im Schwerpunkt,
$v_x$    die Fahrgeschwindigkeit, d.h. die Geschwindigkeit des Fahrzeuges in Richtung seiner Längsachse,
$v_r$    die Geschwindigkeit des Zentrums des Hinterrades,
$v_f$    die Geschwindigkeit des Zentrums des Vorderrades,
r     die Giergeschwindigkeit,
$l_f$    der Abstand zwischen Vorderachse und Schwerpunkt,
$l_r$    der Abstand zwischen Hinterachse und Schwerpunkt,
$\delta_f$    der Lenkwinkel der Vorderräder,
$\delta_r$    der Lenkwinkel der Hinterräder,
$\alpha_f$    der Schräglaufwinkel der Vorderräder,
$\alpha_r$    der Schräglaufwinkel der Hinterräder,
S     eine laterale Störkraft und
e     der Abstand der lateralen Störkraft S vom Schwerpunkt.

Das Produkt Se stellt also ein um die den Fahrzeugschwerpunkt CG enthaltende Hochachse z des Fahrzeuges wirkendes Störmoment dar, welches das Fahrzeug aus seiner Spur zu bringen sucht. Dabei kann es sich beispielsweise um ein Windgiermoment oder ein Bremsgiermoment od.dgl. handeln.

Im übrigen besitzt das Fahrzeug eine Masse M sowie eine Trägheit $J_z$ relativ zur Hochachse z.

Von den Vorder- und Hinterrädern werden Achsseitenkräfte $F_f$ und $F_r$ erzeugt, welche sich näherungsweise wie folgt berechnen lassen:

$$F_f = c_f \, \alpha_f = c_f \left( \delta_f - \beta - \frac{l_f}{v_x} r \right)$$

$$F_r = c_r \, \alpha_r = c_r \left( \delta_r - \beta + \frac{l_r}{v_x} r \right)$$

Wenn berücksichtigt wird, daß in Richtung der Fahrzeugquerachse y ein Kräfte-Gleichgewicht und bezüglich der den Fahrzeugschwerpunkt CG durchsetzenden vertikalen Hochachse z ein Momenten-Gleichgewicht gegeben sein müssen, ergeben sich folgende Bewegungsgleichungen:

$$Mv_x (r + \dot\beta) = F_f + F_r + S$$

$$J_z \dot r = F_f l_f - F_r l_r + Se$$

Die Hinterradlenkung ist als automatisch arbeitende Zusatzlenkung ausgelegt, welche mittels eines Zustandsreglers betätigt wird. Dabei wird als Stellgröße für den Lenkwinkel der Hinterräder ein Wert u vom Regler vorgegeben, wobei gilt:

$$u = - (k_1 r + k_2 \beta + k_3 \delta_r + k_4 u_I)$$

wobei

$$u_I = \int_0^t (r - r_w) dT \quad \text{bzw.} \quad \dot u_I = r - r_w$$

4

Hierbei ist $r_w$ der Sollwert der Giergeschwindigkeit, welcher durch die Einstellung des vom Fahrer betätigten, die Vorderradlenkung steuernden Lenkhandrades und die vom Fahrer gewünschte Gierverstärkung vorgegeben wird.

Erfindungsgemäß werden die Proportionalitätsfaktoren $k_1$ bis $k_4$ bevorzugt so eingestellt, daß gilt:

$$k_1 = \frac{b_{r2}P_{k1} + (a_{11}b_{r2} - a_{21}b_{r1})P_{k2}}{s_S DK}$$

$$k_2 = \frac{-b_{r1}P_{k1} + (a_{12}b_{r2} - a_{22}b_{r1})P_{k2}}{s_S DK}$$

$$k_3 = -1 - \frac{P_3 + a_{11} + a_{22}}{s_S}$$

$$k_4 = -\frac{P_O}{s_S (a_{12}b_{r2} - a_{22}b_{r1})}$$

$$DK = a_{12}b_{r2}^2 - a_{21}b_{r1}^2 + b_{r1}b_{r2} (a_{11} - a_{22})$$

$$P_{k1} = \frac{b_{r1}P_O}{a_{12}b_{r2} - a_{22}b_{r1}} - P_1 + (a_{11}a_{22} - a_{12}a_{21})(P_3 + a_{11} + a_{22})$$

$$P_{k2} = a_{11}a_{22} - a_{12}a_{21} - p_2 - (a_{11} + a_{22})(p_3 + a_{11} + a_{22})$$

$$a_{11} = -\frac{C_f l_f^2 + C_r l_r^2}{J_z V_x} \qquad a_{12} = \frac{C_r l_r - C_f l_f}{J_z}$$

$$a_{21} = -1 + \frac{C_r l_r - C_f l_f}{Mv_x} \qquad a_{22} = -\frac{C_r + C_f}{Mv_x}$$

$$b_{f1} = \frac{C_f l_f}{J_z} \qquad b_{r1} = -\frac{C_r l_r}{J_z} \qquad b_{S1} = \frac{e}{J_z}$$

$$b_{f2} = \frac{C_f}{Mv_x} \qquad b_{r2} = \frac{C_r}{Mv_x} \qquad b_{S2} = \frac{1}{Mv_x}$$

und

$$S_s = -1/T_s,$$

wobei $T_s$ die Zeitkonstante der Stellorgane der Hinterradzusatzlenkung ist,

$$P_3 = -S_1 - S_2 - S_3 - S_4$$

$$P_2 = S_1(S_2 + S_3 + S_4) + S_2(S_3 + S_4) + S_3 S_4$$

$$P_1 = -S_1 S_2(S_3 + S_4) - S_3 S_4(S_1 + S_2)$$

$$P_O = S_1 S_2 S_3 S_4.$$

Hierbei sind - mathematisch betrachtet - $S_1$ bis $S_4$ die Pole der dem Fahrzeug mit Zustandsregler zugeordneten Übertragungsfunktion, d.h. die Proportionalitätsfaktoren $k_1$ bis $k_4$ sind in umkehrbar eindeutiger Weise mit den Lagen der Pole bzw. mit den Werten von $S_1$ bis $S_4$ korreliert. Dementsprechend können die Werte von $S_1$ bis $S_4$ (praktisch)

EP 0 571 726 B1

beliebig vorgegeben und die Proportionalitätsfaktoren $k_1$ bis $k_4$ entsprechend eingestellt werden.

Da $S_1$ und $S_2$ (in der Übertragungsfunktion) mit der Gierdämpfung D sowie der Eigenfrequenz $\omega_o$ des Fahrzeuges gemäß

$$S_1 = -D\,\omega_o + \omega_o \cdot \sqrt{D^2 - 1}$$

$$S_2 = -D\,\omega_o - \omega_o \cdot \sqrt{D^2 - 1}$$

verknüpft sind, können die fahrdynamischen Parameter D und $\omega_o$ praktisch beliebig vorgegeben und durch entsprechende Einstellung der Proportionalitätsfaktoren $k_1$ bis $k_4$ und damit durch entsprechende Steuerung der Hinterradzusatzlenkung mittels des Zustandsreglers unabhängig vom jeweiligen Fahrzustand gewährleistet werden.

Die Werte von $S_3$ inne $S_4$ können grundsätzlich ebenfalls beliebig vorgegeben werden.

Vorzugsweise erfolgt die Vorgabe so, daß zumindest angenähert gilt

$$S_3 = S_4 = S_S \text{ , wobei } S_S = -1/T_S.$$

Wenn aus Kostengründen die Radhäuser der Hinterräder gegenüber einem Standard-Fahrzeug nicht verändert werden dürfen, kann für die Hinterräder in der Regel nur ein Stellbereich bis ca. $\pm$ 6 Grad ermöglicht werden. Dies hat zur Folge, daß die vorzugebenden fahrdynamischen Parameter - Gierverstärkung, Gierdämpfung sowie Eigenfrequenz - nicht gar zu stark von denjenigen des entsprechenden Fahrzeuges ohne Zustandsregler abweichen dürfen.

Außerdem ist es im Hinblick auf das Verzögerungsverhalten der Stellorgane der Hinterradzusatzlenkung nicht sinnvoll, für den Wert von $S_3$, der mit dem Zeitverhalten der Regelung verknüpft ist, Werte vorzugeben, die kleiner als $S_S$ bzw. $-1/T_S$ sind.

Bei der oben angegebenen Reglereinstellung wird davon ausgegangen, daß das Verzögerungsverhalten der Stellorgane der Hinterradzusatzlenkung durch ein Verzögerungssystem 1. Ordnung angenähert wiedergegeben wird. Danach ist die Stellgeschwindigkeit $\dot{\delta}_r$ der Stellorgane proportional zur Abweichung zwischen der Stellgröße u und dem Istwert $\delta_r$ des Hinterradlenkwinkels, gemäß

$$\dot{\delta}_r = S_S\,(\delta_r - u).$$

**Patentansprüche**

1. Nicht spurgebundes Fahrzeug mit einer von Fahrer mittels einer Lenkhandhandhabe, insbesondere eines Lenkhandrades, betätigten Lenkung der Vorderräder sowie einer davon mechanisch entkoppelten, auf die Hinterräder wirkenden Zusatzlenkung, deren Stellorgane mittels einer selbsttätig arbeitenden Steuervorrichtung in Abhängigkeit von vorgegebenen Parametern betätigt werden,
wobei die Steuervorrichtung einen Zustandsregler umfaßt, welcher die Stellorgane der Zusatzlenkung steuert,
wobei der für den Stellhub vorgegebene Wert einer Stellgröße (u) proportional zum Istwert der Giergeschwindigkeit (r), zum Istwert des Schwimmwinkels ($\beta$), zum Istwert des von der Zusatzlenkung bewirkten Lenkwinkels ($\delta_r$) sowie zu einer Zustandsgröße ($u_l$) ist, deren Änderungsgeschwindigkeit von einer Abweichung zwischen dem Istwert der Giergeschwindigkeit (r) und dem zugehörigen Sollwert ($r_w$), welcher durch den Verstellwinkel der Lenkhandhabe oder damit korrelierten Größen und vorzugsweise auch durch eine Fahrgeschwindigkeit und/oder einen wählbaren Wert der Gierverstärkung vorgegeben wird, abhängig ist.

2. Fahrzeug nach Anspruch 1,
**dadurch gekennzeichnet,**
daß die Stellgröße (u) eingestellt wird gemäß

$$-u = k_1 r + k_2 \beta + k_3 \delta_r + k_4 u_l,$$

mit

| | |
|---|---|
| u | Stellgröße |
| r | Giergeschwindigkeit |
| $\beta$ | Schwimmwinkel |
| $\delta_r$ | Lenkwinkel der Zusatzlenkung |
| $u_l$ | Zustandsgröße |

6

wobei $k_1$ bis $k_4$ so vorgegeben sind, daß das Fahrzeug ein - zumindest angenähert - vorgegebenes dynamisches Verhalten mit vorgegebener Gierdämpfung (D) und vorgegebener Eigenfrequenz ($\omega_0$) aufweist.

3. Fahrzeug nach Anspruch 1 oder 2,
   **dadurch gekennzeichnet,**
   daß Meßwertgeber oder Sensoren zur Erfassung des Lenkhandradwinkels oder einer damit korrelierten Größe, des Hinterradlenkwinkels ($\delta_r$) sowie der Giergeschwindigkeit (r) und vorzugsweise auch der Fahrgeschwindigkeit (v) angeordnet sind.

4. Fahrzeug nach Anspruch 3,
   **dadurch gekennzeichnet,**
   daß der Schwimmwinkel ($\beta$) rechnerisch geschätzt wird, wobei ein Rechner mittels eines vorgegebenen Fahrzeugmodells oder Kennfeldes aus eingangsseitig zugeführten Signalen für die Lenkwinkel der Vorder- und Hinterräder ($\delta_f, \delta_r$) - sowie gegebenenfalls für weitere Parameter, wie z.B. Fahrgeschwindigkeit (v) - Werte für die Giergeschwin-digkeit ($\hat{r}$) sowie den Schwimmwinkel ($\hat{\beta}$) ermittelt und sodann unter Berücksichtigung der Abweichung ($\hat{r}$ - r) zwi-schen dem Istwert (r) und dem ermittelten Wert ($\hat{r}$) der Giergeschwindigkeit das Fahrzeugmodell oder Kennfeld so in vorgegebener Weise verändert, daß Istwert (r) und ermittelter Wert ($\hat{r}$) der Giergeschwindigkeit übereinstimmen, wobei der mit diesem geänderten Fahrzeugmodell oder Kennfeld ermittelte Wert des Schwimmwinkels als Schätz-wert ($\hat{\beta}$) für die Ermittlung der Stellgröße (u) nach dem Beobachterprinzip herangezogen wird.

5. Fahrzeug nach Anspruch 4,
   **dadurch gekennzeichnet,**
   daß für die Fahrgeschwindigkeit (v) lediglich ein Fixwert vorgegeben ist.

6. Fahrzeug nach einem der Ansprüche 1 bis 5,
   **dadurch gekennzeichnet,**
   daß die Gierverstärkung, d.h. das Verhältnis zwischen der Giergeschwindigkeit (r) und dem Lenkhandradwinkel oder einer damit korrelierten Größe veränderbar ist.

7. Fahrzeug nach einem der Ansprüche 1 bis 6,
   **dadurch gekennzeichnet,**
   daß die Stellgeschwindigkeit ($\dot{\delta}_r$) der Stellorgane der Zusatzlenkung proportional mit der Differenz zwischen dem Istwert ($\delta_r$) und der Stellgröße (u) oder dem Sollwert des von der Zusatzlenkung bewirkten Lenkwinkels ist.

## Claims

1. A non-track-bound motor vehicle with front-wheel steering operated by the driver by means of a steering arm, in particular a steering wheel, and, mechanically decoupled therefrom, an auxiliary rear-wheel steering system in which the adjusting members are automatically operated by a control device on the basis of set parameters, wherein the control device has a status controller which controls the adjusting members of the auxiliary steering, wherein the value of a control variable (u) set for the operating stroke is proportional to the actual value of the yaw speed (r), the actual value of the float angle ($\beta$), the actual value of the steering angle ($\delta_r$) as imposed by the auxiliary steering as well as to a status value ($u_l$), the change of rate of which depends on a variance between the actual value of the yaw speed (r) and the related desired value (r), which is determined by the angular position of the steering arm or values correlated therewith and also by means of a travel speed and/or a selectable value of the increase in yaw.

2. A motor vehicle as claimed in claim 1,
   **characterised in that**
   the control variable (u) is set on the basis of

$$- u = k_1 r + k_2 \beta + k_3 \delta_r + k_4 u_l,$$

   where

   $u$      control variable
   $r$      yaw speed
   $\beta$      float angle
   $\delta_r$      steering angle of the auxiliary steering

$u_l$      status value

whereby $k_1$ to $k_4$ are set so that the vehicle exhibits a - at least approximately - predetermined dynamic behaviour with predetermined yaw damping (D) and predetermined natural frequency ($\omega_0$).

**3.** A motor vehicle as claimed in claim 1 or 2,
**characterised in that**
transducers or sensors are provided for recording the steering-wheel angle or a value correlated therewith, the rear-wheel steering angle ($\delta_r$) and the yaw speed (r) and preferably also the travel speed (v).

**4.** A motor vehicle as claimed in claim 3,
**characterised in that**
the float angle ($\beta$) is computed as an estimate, wherein by means of a predetermined vehicle model or corresponding characteristic field of input signals pertaining to the steering angle of the front and rear wheels ($\delta_f$ $\delta_r$) - and if necessary other parameters, such as travel speed (v) - a computer can derive values for the yaw speed ($\hat{r}$)and the float angle ($\beta$) and then, by taking account of the variance ($\hat{r}$ - r)between the actual value (r) and the computer-generated value ($\hat{r}$) of the yaw speed, adjust so as to set the mathematical vehicle model or characteristic field such that the actual value (r) and the computer-generated value ($\hat{r}$) of the yaw speed agree, whereby the value of the float angle generated by the amended vehicle model or characteristic field will be applied as the estimated value ($\beta$)in order to derive the control variable (u) on the basis of the observer principle.

**5.** A motor vehicle as claimed in claim 4,
**characterised in that**
for the travel speed (v) only a fixed value is predetermined.

**6.** A motor vehicle as claimed in one of claims 1 to 5,
**characterised in that**
the increase in yaw, i.e. the ratio between the yaw speed (r) and the steering-wheel angle or a value correlated therewith is variable.

**7.** A motor vehicle as claimed in one of claims 1 to 6,
**characterised in that**
the adjustment speed ($\dot{\delta}_r$) of the adjusting members of the auxiliary steering is proportionate to the difference between the actual value ($\delta_r$) and the control variable (u) or the desired value of the steering angle imposed by the auxiliary steering.

**Revendications**

**1.** Véhicule non guidé, comportant une unité de braquage des roues avant, actionnée par le conducteur à l'aide d'un organe manuel de direction, notamment un volant de direction, ainsi qu'une unité supplémentaire de direction découplée mécaniquement de l'unité de direction précédente et agissant sur les roues arrière et dont les organes de réglage sont actionnés à l'aide d'un dispositif de commande travaillant de façon automatique, en fonction de paramètres prédéterminés,
dans lequel le dispositif de commande comprend un régulateur d'état, qui commande les organes de réglage de l'unité supplémentaire de direction, et
dans lequel la valeur, prédéterminée pour la course de réglage, d'une grandeur de réglage (u) est proportionnelle à la valeur réelle de la vitesse de lacet (r), à la valeur réelle de l'angle d'attitude ($\beta$), à la valeur réelle de l'angle de braquage ($\delta_r$) commandée par l'unité supplémentaire de direction ainsi qu'à une grandeur d'état ($u_l$) dont la vitesse de variation dépend d'un écart entre la valeur réelle de la vitesse de lacet (r) et la valeur de consigne associée ($r_w$), qui est prédéterminée par l'angle de réglage de l'organe manuel de direction ou par des grandeurs, qui sont corrélées à cet angle, et de préférence également par une vitesse de déplacement et/ou une valeur pouvant être sélectionnée de l'amplification de lacet.

**2.** Véhicule selon la revendication 1? caractérisé en ce que la grandeur de réglage (u) est réglée conformément à

$$- u = k_1 r + k_2 \beta + k_3 \delta_T + k_4 u_l,$$

avec

| u | grandeur de réglage |
|---|---|
| T | vitesse de lacet |
| $\beta$ | angle d'attitude |
| $\delta_T$ | angle de braquage de l'unité supplémentaire de direction |
| $u_I$ | grandeur d'état |
| $k_1$ à $k_4$ | étant prédéterminés de telle sorte que le véhicule possède un comportement dynamique prédéterminé - au moins approximativement - avec un amortissement de lacet prédéterminé (D) et une fréquence prédéterminée ($\omega_0$). |

3. Véhicule selon la revendication 1 ou 2, caractérisé en ce
que des transmetteurs de valeurs de mesure ou des capteurs sont prévus pour détecter l'angle du volant de direction ou une grandeur corrélée à cet angle, de l'angle ($\delta_r$) de braquage des roues arrière ainsi que de la vitesse de lacet (v) et de préférence également la vitesse de déplacement (v).

4. Véhicule selon la revendication 3, caractérisé en ce
que l'angle d'attitude ($\beta$) est évalué par calcul, auquel cas le calculateur détermine, à l'aide d'un modèle prédéterminé du véhicule ou d'un champ prédéterminé de caractéristiques, à partir de signaux envoyés côté entrée pour l'angle de braquage des roues avant et des roues arrière ($\delta_b$, $\delta_r$) - ainsi que éventuellement pour d'autres paramètres, comme par exemple la vitesse de déplacement (v) - des valeurs pour la vitesse de lacet ($\hat{r}$) ainsi que pour l'angle d'attitude ($\hat{\beta}$) et alors, en tenant compte de l'écart ($\hat{r}$ - r) entre la valeur réelle (r) et la valeur déterminée ($\hat{r}$) de la vitesse de lacet, modifie le modèle du véhicule ou le champ de caractéristiques d'une manière prédéterminée afin que la valeur réelle (r) et la valeur déterminée ($\hat{r}$) de la vitesse de lacet coïncident, et la valeur de l'angle d'attitude, déterminée avec ce modèle modifié de véhicule ou ce champ de caractéristiques modifié, est utilisée en tant que valeur estimée ($\hat{\beta}$) pour la détermination de la grandeur de réglage (u) conformément au principe de l'observateur.

5. Véhicule selon la revendication 4, caractérisé en ce
que seule une valeur fixe est prédéterminée pour la vitesse de déplacement (v).

6. Véhicule selon l'une des revendications 1 à 5, caractérisé en ce
que l'amplification de lacet, c'est-à-dire le rapport entre la vitesse de lacet (r) et l'angle du volant de direction ou une grandeur corrélée à cet angle, peut être modifiée.

7. Véhicule selon l'une des revendications 1 à 6, caractérisé en ce
que la vitesse de réglage ($\dot{\delta}_r$) des organes de réglage de l'unité supplémentaire de direction est proportionnelle à la différence entre la valeur ($\delta_r$) et la grandeur de réglage (u) ou la valeur de consigne de l'angle de braquage commandé par l'unité supplémentaire de direction.